# EUROPEAN PATENT APPLICATION

(11) **EP 3 006 000 A1**
(43) Date of publication of application: **13.04.2016**
(21) Application number: 14807961.9
(22) Date of filing: 15.04.2014
(51) Int. Cl.: A61G 5/10, A62B 9/00, B60Q 1/32, F21L 4/04, F21S 8/10, F21S 9/02

(54) **LUMINOUS SIGNALLING DEVICE FOR SIGNALLING PRESENCE ON PEDESTRIAN CROSSINGS**

(30) Priority: 05.06.2013 ES 201330828 P
(71) Applicant: Santos Benítez, María Isabel, 06007 Badajoz (ES)
(72) Inventor: Santos Benítez, María Isabel, 06007 Badajoz (ES)
(74) Representative: González López-Menchero, Álvaro Luis
(86) International application number: PCT/ES2014/070314
(87) International publication number: WO 2014/195540

(57) **Abstract**

The invention relates to a box of insulating material which houses a strip of lilac LEDs, said strip being programmed to operate as a flickering light and being electrically powered by batteries, said box being attached to the sides or wheels of a transport means such as a wheelchair, a pram, a bicycle or the like, by means of a fastening means such as nuts and bolts, velcro or other such suitable means, said fastening means being in the rear area of the box.

## Description

### OBJECT OF THE INVENTION

As stated in the title, the present invention relates to a very useful luminous device that may be mainly coupled to wheelchairs, prams, or even bicycles, which enables the presence thereof to be signalled by means of a lilac, or similar coloured, flickering light, especially on pedestrian crossings and other places where there is a high risk to the safety of people.

The object of this invention is to provide a solution hitherto unknown for several drawbacks that shall be mentioned below. Mainly, the aim is to achieve a final result that enables a specific group of people, who are especially vulnerable, to be more visible in order to prevent accidents.

The device in question provides essential features of novelty and considerable advantages with respect to the means known and used for the same purpose in the current state of the art.

Currently, there are many accidents that involve unfortunate damage and injury, including the loss of life, due to the lack of lighting on wheelchairs, prams, bicycles, etc. These transport means are very vulnerable and must deal with the other vehicles on the road on a daily basis. Under conditions of reduced visibility, whether due to being night time or due to rain or fog, a pedestrian crossing that is not adequately lit may be fatal for disabled persons crossing the road in their wheelchair. Although reflective jackets or headlights are known, these are clearly inadequate since they simply act when directly illuminated by an external light source, they cannot usually be seen at short distances and they are neither practical nor viable for all transport means, such as prams. Moreover, some luminous means for the front and rear areas are known. However, there are currently no autonomous side lighting systems, which correctly signal presence whilst crossing a pedestrian crossing.

These wheelchairs or baby or child prams, while completely satisfactorily fulfilling the function for which they were designed, present the fundamental problem that they lack a side presence signalling system that enables the transport means to be seen correctly whilst crossing a pedestrian crossing.

The light of the invention offers a completely satisfactory solution to the problem set out above, providing a series of advantageous and novel features, without implying a decrease in the performance thereof in other aspects.

The proposed invention seeks to provide an economical, ecological, practical, simple and easy-to-use solution, the effect of which will enable specific and very vulnerable transport means to be optimally seen, the luminous presence indication of which may save lives on a pedestrian crossing.

The field of application of the present invention falls within the luminous device sector, and more specifically, in that of devices that may be coupled to transport means.

### BACKGROUND OF THE INVENTION

Some documents related to the invention in question may be found in the state of the art, although none of them provide the same advantageous features and neither do they effectively resolve the existing drawbacks.

Thus, document ES 1 040 836 presents a scooter for transporting physically disabled people, essentially characterised by being made up of a basically rectangular platform, two driving wheels, which receive drive from a differential gear motor group through each drive shaft, being arranged on the rear corners of said platform, this drive unit being supplied by two batteries, which are recharged through an automatic charger by mean of a control box and all these elements being arranged in the middle rear portion of the rectangular platform covered by a fairing, on the highest portion of which two lights are arranged.

Although this document provides a transport means equipped with a lighting system for people with reduced mobility, it has the drawback of being very complicated device to manufacture and use, as well as its high cost.

Moreover, document ES 2 296 542 provides a robotic wheelchair with autonomous operation capacity that includes a navigation system comprising different types of sensors, microcontrollers and user interface elements, as well as a computer, characterised in that: • all the components of said system may be removed, updated and are not integrated as fixed parts of the structure of the adapted wheelchair; • the navigation system comprises a video camera, infrared sensors, sonars, an odometer system, battery state control system, tilt sensor, supports and positioners for the different components, luminous signallers, junction box, speakers and a computer.

Similarly to the previous document, this provides a complex and expensive solution that is not available to everyone. Furthermore, it cannot be used to transport children.

In turn, document ES 2 350 304 claims a small motorised vehicle, which includes: a seat arranged on a vehicle bodywork to be used by the vehicle passenger; an electric motor that is supplied with electric power from a battery; and wheels that turn due to the actuation force of the electric motor to move the small motorised vehicle; where radiating means are arranged on a backrest of the seat or a portion close to the backrest, characterised in that the radiating means are arranged so as to radiate on the back of the vehicle passenger, and in that the radiating means are formed by a plurality of photo-emitting elements, where the orientation of the radiation of the photo-emitting elements can be changed to radiate on the entire back area of the vehicle passenger, or a lens is arranged in each of the photo-emitting elements and the orientation of the lens may be changed to radiate on the entire back area of the vehicle passenger above the backrest.

This document does not provide any solution for the aforementioned drawbacks either, being ineffective for the problem regarding the lack of suitable autonomous signalling of specific transport means on pedestrian crossings.

Thus, it may be seen that up until now no device for signalling presence on pedestrian crossings is known that resolves the aforementioned drawbacks through novel features, both in terms of the cited documents and other traditional inventions or systems that can be found in the state of the art.

Taking into consideration the aforementioned cases and having analysed the combined arguments, the invention proposed in this document gives rise to a final result that provides significant differentiating aspects compared to the current state of the art, and where a series of advances in the already known elements, along with the corresponding advantages thereof, are provided.

In particular:
- A device that may be coupled to any transport means, such as a wheelchair, prams, bicycles, etc. is achieved. Similarly, the signaller may be used to indicate the position of pets when they cross the pedestrian crossing, thus preventing a large number of accidents caused by hitting animals.
- It is a cheap device.
- It is simple to manufacture and use.
- It is energy efficient.
- It can be seen from great distances and even in conditions of reduced visibility.
- The light is installed on one side of the transport means in order to be seen correctly whilst crossing a pedestrian crossing.
- The lilac or similar coloured light is a flickering light and it is not linked to other colours used on roadways.
- Its small size makes it easy to store and transport.
- The luminous device is also beneficial in order to better see people crossing a pedestrian crossing when the driver has the sun in their eyes.

### DESCRIPTION OF THE INVENTION

Thus, the present invention is made up of the following elements:
A box of insulating material which houses a strip of lilac LEDs, said strip being programmed to operate as a flickering light and being electrically powered by batteries, said box being attached to the sides or wheels of a transport means such as a wheelchair, a pram, a bicycle or the like, by means of a fastening means such as nuts and bolts, velcro or other such suitable means, said fastening means being in the rear area of the box.

### BRIEF DESCRIPTION OF THE DRAWINGS

For a better understanding of this specification, a drawing is included by way of non-limiting example, which describes a preferred embodiment of the invention:

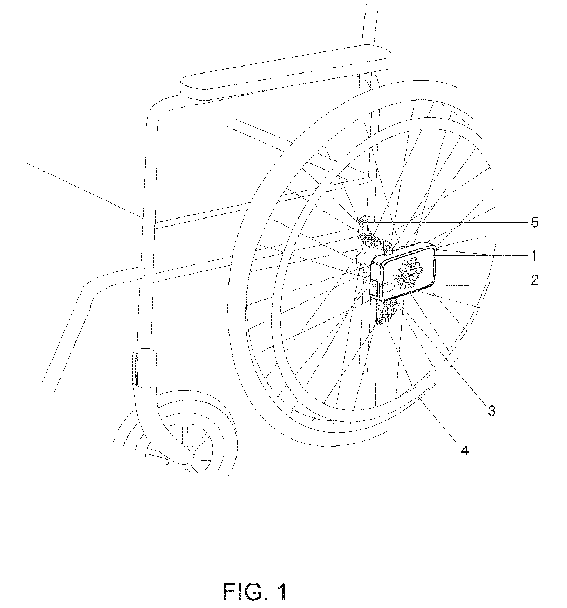

Figure 1.- Perspective view of the invention.

In said figure, the following numbered elements are highlighted:
1. Box
2. Strip of LEDs
3. Batteries
4. Wheels
5. Fastening means

### PREFERRED EMBODIMENT OF THE INVENTION

A preferred embodiment of the proposed invention is made up of the following elements: a box (1) of insulating material which houses a strip of lilac LEDs (2), said strip being programmed to operate as a flickering light and being electrically powered by batteries (3), said box being attached to the sides or wheels (4) of a transport means such as a wheelchair, a pram, a bicycle or the like, by means of a fastening means (5) such as nuts and bolts, velcro or other such suitable means, said fastening means being in the rear area of the box.

## Claims

1. A luminous signalling device for signalling presence on pedestrian crossings, **characterised in that** it is made up of a box of insulating material, which houses a strip of lilac LEDs, said strip being programmed to operate as a flickering light and being electrically powered by batteries,
said box being attached to the sides or wheels of a transport means such as a wheelchair, a pram, a bicycle or the like, by means of a fastening means such as nuts and bolts, velcro or other such suitable means, said fastening means being in the rear area of the box.
